# EUROPÄISCHE PATENTANMELDUNG

(11) **EP 2 505 986 A1**
(43) Veröffentlichungstag der Anmeldung: **03.10.2012**
(21) Anmeldenummer: 11160647.1
(22) Anmeldetag: 31.03.2011
(51) Int. Cl.: G01N 21/35, G02B 26/08

(54) **Bildgebendes THz-Messverfahren und Vorrichtung**

(71) Anmelder: PHILIPPS-UNIVERSITÄT MARBURG, 35037 Marburg (DE)
(72) Erfinder: Koch, Martin, 35274 Kirchhain (DE); Scheller, Maik, Tucson, AZ 85704 (US); Jansen, Christian, 35037 Marburg (DE); Schumann, Steffen, 35037 Marburg (DE)
(74) Vertreter: Stumpf, Peter

(57) **Zusammenfassung**

Die vorliegende Erfindung betrifft ein bildgebendes THz-Messverfahren, das unter Einsatz von mindestens einem spektralauffächernden und / oder spektralsammelnden Komponente oder unter Einsatz von mindestens einer spektralauffächernde und / oder spektralsammelnden Komponente in Kombination mit mindestens einem abbildenden System, die Frequenz- in eine Ortsinformation überführt, so dass die Messzeit verkürzt wird und / oder mechanische Komponenten eingespart werden.

## Beschreibung

Die vorliegende Erfindung betrifft ein bildgebendes THz-Messverfahren, das unter Einsatz von mindestens einem spektralauffächernden und / oder spektralsammelnden Komponente oder unter Einsatz von mindestens einer spektralauffächernde und / oder spektralsammelnden Komponente in Kombination mit mindestens einem abbildenden System, die Frequenz- in eine Ortsinformation überführt, so dass die Messzeit verkürzt wird und / oder mechanische Komponenten eingespart werden.

### Beschreibung

### Stand der Technik

Der THz-Bereich liegt im elektromagnetischen Spektrum zwischen den Mikrowellen und der infraroten Strahlung. Diese exponierte Stellung zwischen Optik und Elektronik eröffnet eine Vielzahl von metrologischen Applikationen, beispielsweise in der Sicherheitstechnik, in der industriellen Prozessüberwachung und in der Medizintechnik.

Von besonderer Bedeutung sind vor allem bildgebende Verfahren. In vielen Bereichen könnten mit nicht-ionisierenden THz Wellen arbeitende Systeme die derzeit eingesetzten, jedoch aus Strahlenschutzgründen oft kritisch bewerteten Röntgenscanner ablösen. Industriezweige, die großes Interesse an der Nutzung von THz-Scannern zeigen sind unter anderem die Lebensmittelbranche, Pharmakologieunternehmen und Kunststoffverarbeiter. Bildgebende THz-Messungen liefern u.a. Bilder, die Strukturinformationen aus dem inneren einer Probe darstellen. Dem breiten Einsatz von THz-Scannern steht momentan noch die niedrige Messgeschwindigkeit von bildgebenden THz-Systemen im Wege. Oftmals ist es wünschenswert THz-Scanner direkt an Förderbändern in Produktionslinien zu integrieren um somit eine 100-prozentige Kontrolle zu gewährleisten und eine Echtzeit-Prozesssteuerung zu erreichen. Um diesen Ansprüchen gerecht zu werden, darf die Dauer einer bildgebenden Messung jedoch nur noch ein Hundertstel der Messzeit betragen, die bei Systemen gemäß dem Stand der Technik üblich ist. Weiterhin sind die Kosten für ein bildgebendes THz-System noch recht hoch, da neben aufwendigen Optiken oftmals komplexe Mechaniken zum Einsatz kommen. Gemäß dem Stand der Technik werden THz-Wellen durch geeignete quasi-optische Komponenten auf einen kleinstmöglichen Punkt fokussiert. Meist wird die Probe dann im Fokuspunkt durch schrittweises Verfahren gerastert und so eine bildliche Darstellung erzeugt.

Die häufigste und auch einfachste Möglichkeit bietet eine mechanische Verfahreinheit, welche die Probe durch den örtlich festen Fokuspunkt der THz-Strahlung verschiebt. Ein anderer Ansatz verschiebt statt der Probe den Fokuspunkt der THz-Strahlung auf einer Linie indem eine spezielle Linsenanordnung mit mechanisch verstellbaren Kippspiegeln kombiniert wird. Auch hier ist eine aufwendige und kostspielige Mechanik von Nöten. Der Vorteil dieser Technik liegt darin, dass sie einfach an ein Fließband integriert werden kann. In diesem Fall liefert das Fließband den Vorschub der Probe von einer Linie zur nächsten und die Kippspiegel fahren die einzelnen Zeilen ab. Auf diese Weise wird eine berührungslose Qualitätskontrolle möglich. Jedoch ist auch diese Methode langsam und bietet keinen signifikanten Geschwindigkeitsvorteil gegenüber dem Rasterscanverfahren bei dem die Probe durch ein mechanisches Verfahren der Probe oder des Fokuspunktes gerastert wird. Jeder Punkt des aufgenommenen Bildes entspricht dabei einer Messung der THz-Strahlung, daher sind bisherige Verfahren zu langsam für einen Echtzeitbetrieb. Außerdem sind sie aufwendig und kostspielig in ihrem Aufbau, da mechanische Komponenten wie Verfahreinheiten oder motorisierte Kippspiegel zum Einsatz kommen.

### Aufgabe

Die Aufgabe ist es daher eine Vorrichtung zur Durchführung von bildgebenden THz-Messungen bereitzustellen und ein Verfahren zur Durchführung zu entwickeln, dass die Messzeit einer bildgebenden THz-Messung reduziert und / oder mechanische Komponenten vermeidet um somit die Systemkosten zu senken.

### Lösung der Aufgabe

Zu diesem Zweck wird erfindungsgemäß eine Vorrichtung gemäß Anspruch 1, die spektralauffächernde 3a und / oder spektralsammelnde 3b Komponenten aufweist, und ein Verfahren nach Anspruch 13 und / oder Anspruch 14 zur Überführung einer Frequenz- in eine Ortsinformation verwendet, um im bildgebenden THz-Verfahren unter Verwendung eines gepulsten Systems gleichzeitig mindestens eine Linie des Bildes zu erfassen. Unter Verwendung eines cw-Systems (Dauerstrich-Messsystems / continuous wave Systems) wird auf diese Weise eine Bildlinie durch Durchstimmen der Emitterfrequenz gemessen. Hierbei erfolgt eine räumliche Auffächerung des THz-Strahls in einer Raumrichtung, insbesondere orthogonal zur THz-Propagationsrichtung.

Ausführungsbeispiele der erfindungsgemäß geeigneten spektralauffächernden 3a und / oder spektralsammelnden 3b Komponenten sind THz-Beugungsgitter 11, insbesondere hoch-effiziente THz-Gitter mit Blaze-Technik 13, THz-Prismen 15 und THz-Wellenleiter 17. Als THz-Beugungsgitter 11 und THz-Beugungsgitter mit Blaze Technik 13 eignen sich insbesondere aus Metallen (beispielsweise Aluminium, Kupfer, Messing, Stahl) gefertigte Strukturen, die in Reflexion betrieben werden oder aus Kunststoffen gefertigte Komponenten, die in Transmission arbeiten. THz-Prismen bestehen beispielsweise aus Kunststoffen, Polymeren, Gläsern, Silicaten und / oder Keramiken. Geeignete THz-Wellenleiter 17 sind insbesondere Parallelplattenwellenleiter.

Das THz-System kann in zwei alternativen Arten betrieben werden, als gepulstes System oder als cw-System.

Ein gepulstes THz-System arbeitet mit elektromagnetischen Pulsen die aufgrund ihrer kurzen Zeitdauer im Pikosekundenbereich Frequenzkomponenten von unter 100 GHz bis weit über 1 THz beinhalten. Bei Verwendung des gepulsten Systems erhält man mit der Messung eines THz-Pulses statt eines einzelnen Bildpunktes eine ganze Bildlinie so dass die Messzeit eines THz-Bildes von einer Probe deutlich verkürzt wird. Die einzelnen spektralen Anteile werden durch ein geeignetes Abbildungssystem, dass aus Linsen, Spiegeln und / oder diffraktiven Optiken besteht, jeweils auf einem Punkt entlang der Fokuslinie fokussiert, die einer Bildlinie entspricht. Somit ist es mit diesem Verfahren möglich den einzelnen Frequenzkomponenten eine Ortsinformation zuzuordnen. Bei gepulsten Systemen ist so die Aufnahme einer ganzen Bildlinie der Probe mittels einer einzigen Messung möglich. Daraus ergibt sich ein enormer Geschwindigkeitsvorteil von zwei bis drei Größenordnungen im Vergleich zu herkömmlichen Systemen bei der Bildaufnahme.

Eine alternative Nutzweise des vorgestellten Verfahrens ergibt sich in Kombination mit cw-THz-Systemen, also Systemen die zu einem Zeitpunkt immer nur eine Frequenz aussenden. In herkömmlichen bildgebenden cw-THz-Systemen kann der Fokuspunkt auf der Fokuslinie nur mittels mechanischer Komponenten, wie Kippspiegeln oder Verfahreinheiten verstellt werden. Erfindungsgemäß geschieht dies jedoch durch eine Änderung der Frequenz des durchstimmbaren cw-THz-Systems. Es entfällt die mechanische Verschiebung des Fokuspunktes. In cw-THz-Systemen wird eine Frequenzänderung insbesondere elektronisch und / oder thermisch und / oder durch eine mechanische Veränderung in einem Element des cw-THz-Systems erreicht. Dies vereinfacht durch weniger Komponenten den Aufbau und ermöglicht kürzere Verstellzeiten des Fokuspunktes als durch eine mechanische Veränderung der THz-Strahlführung. Insbesondere aufgrund der stetigen Fortschritte bei rein elektronischen Systemen und der damit in Aussicht gestellten Kostenersparnis ist ein derartiger Einsatz des Verfahrens sehr vorteilhaft.

Die Frequenz eines cw-Systems wird auf verschiedenen Wegen durchgestimmt, beispielsweise elektronisch oder thermisch. Die Messzeit eines einzelnen Frequenzpunktes in einem cw-System ist von Natur aus kürzer als bei einem gepulsten THz-System. Der erfindungsgemäße Vorteil liegt hierbei in der Einsparung von mechanischen Komponenten. Stimmt man die Frequenz des cw-Systems durch, so wandert der Fokuspunkt des bildgebenden Systems entlang einer Linie, bevorzugt orthogonal zur THz Propagationsrichtung. Mechanische Strahlumlenkeinheiten wie z.B. Schwenkspiegel oder Galvoscanner werden somit überflüssig. Dadurch wird das System robuster und kostengünstiger.

Betrachtet man die Neuerung, die das erfindungsgemäße Verfahren für bildgebende cw-Systeme bringt, so ist vor allem das Verfahren des Fokuspunktes ohne mechanische Komponenten wie Kippspiegel ein Durchbruch. Zum einen lassen sich durch elektronisches Durchstimmen der Emissionsfrequenz deutlich höhere Geschwindigkeiten realisieren und zum anderen entfallen die Kosten für teure Präzisionsmechanik. Durch diesen Aufbau erreicht man eine Transformation von einer beliebigen Frequenz auf einen Ort der Fokuslinie.

Bei beiden Nutzweisen wird für den Vorschub zur nächsten Bildlinie entweder das Messsystem oder die Probe verschoben. Alternativ ist auch eine weitere Umlenkoptik vorhanden, die auch diesen mechanischen Vorschub ersetzt. Eine weitere Möglichkeit besteht darin die mindestens eine spektralauffächernde und / oder spektralsammelnde Komponente 3 oder das gesamte Messsystem zu rotieren. Damit wird ebenfalls die Fokusline auf der Probe rotiert und somit die Aufnahme eines vollen Bildes ermöglicht. Ein mechanischer Vorschub wird beispielsweise auch durch Förderbänder geleistet.

Erfindungsgemäß wird die THz-Strahlung (im Folgenden definiert zwischen unter 30 GHz und bis über 100 THz) an mindestens einer Stelle auf dem Strahlengang zwischen dem THz-Emitter 1 und der Probe aufgeteilt, wobei die Strahlaufteilung vor oder nach der Spektralauffächerung erfolgt. Ein solches Mehrkanalsystem erlaubt die Aufnahme mehrerer Bildlinien in der gleichen Zeit, in der ansonsten eine Bildlinie gemessen wird, oder mehrerer Proben gleichzeitig und hat den Vorteil, dass dazu lediglich ein THz-Emitter benötigt wird. Jedoch kann auch dieser Aufbau mehrfach in einer Vorrichtung verwendet werden, so dass mehrere THz-Emitter jeweils zur Messung mehrerer Bildlinien verwendet werden. Auf der Detektorseite wird der THz-Strahl mit mehreren Detektoren gemessen. Die Strahlaufteilung erfolgt durch einen Strahlteiler, beispielsweise aus hochresistivem Silizium, Quarzglas oder einem Polymer.

Die Vorteile der vorliegenden Erfindung lassen sich durch drei Kernmerkmale beschreiben:
- In gepulsten THz-Systemen kann ein Bild um mehrere Größenordnungen schneller erfasst werden. Die Systeme werden so echtzeittauglich.
- Bei Verwendung von durchstimmbaren cw-Systemen entfallen mechanische Komponenten, da der Fokuspunkt durch Durchstimmen der Frequenz verstellbar ist, wodurch insbesondere bei elektronisch durchstimmbaren Systemen ebenfalls eine deutliche Steigerung der Geschwindigkeit möglich ist.
- Sowohl gepulste als auch cw-basierte Systeme werden einfacher, robuster und kostengünstiger da mechanische Komponenten entfallen.

Eine erste Möglichkeit des Aufbaus besteht in einem Transmissionsaufbau in dem die THz-Strahlung die Probe durchdringt. Die Frequenzauffächerung und / oder die Frequenzsammlung erfolgt hierbei sowohl durch Reflektion an, als auch durch Transmission durch eine spektralauffächernde und / oder spektralsammelnde Komponente.

Eine zweite Möglichkeit einer Realisierung besteht in einem Reflektionsaufbau bei dem die bildgebende Information aus der an einer Probe reflektierten Strahlung gewonnen wird. Auch hierbei erfolgt die Frequenzauffächerung und / oder Frequenzsammlung sowohl durch Reflektion an, als auch durch Transmission durch eine spektralauffächernde und / oder spektralsammelnde Komponente.

Die Aufgabe des mindestens einem abbildenden Systems 5 ist es, die aufgefächerte Strahlung entlang einer Fokuslinie 25 senkrecht zur optischen Achse zu fokussieren und / oder von der Fokuslinie 25 auf die spektralsammelnde Komponente 3b zu lenken. Das abbildende System 5 besteht aus Linsen für den THz-Frequenzbereich, Spiegeln oder anderen abbildenden Optiken und Kombinationen von diesen Komponenten. Eine erfindungsgemäße Implementierung stellt ein aus der Optik adaptiertes f-⊝-Linsensystem dar. Ein f-⊝-Linsensystem korrigiert den Fehler der Bildfeldwölbung. Der Fokuspunkt befindet sich dabei unabhängig vom Einfallswinkel auf einer Bildebene.

Das zweite abbildende System 6 wird zwischen Detektor und spektralsammelnden Komponente 3b und / oder THz-Emitter 1 und spektralauffächerndem Komponente 3a eingefügt. Auch dieses abbildende System besteht aus Linsen für den THz-Frequenzbereich, Spiegeln oder anderen abbildenden Optiken und Kombinationen von diesen Komponenten.

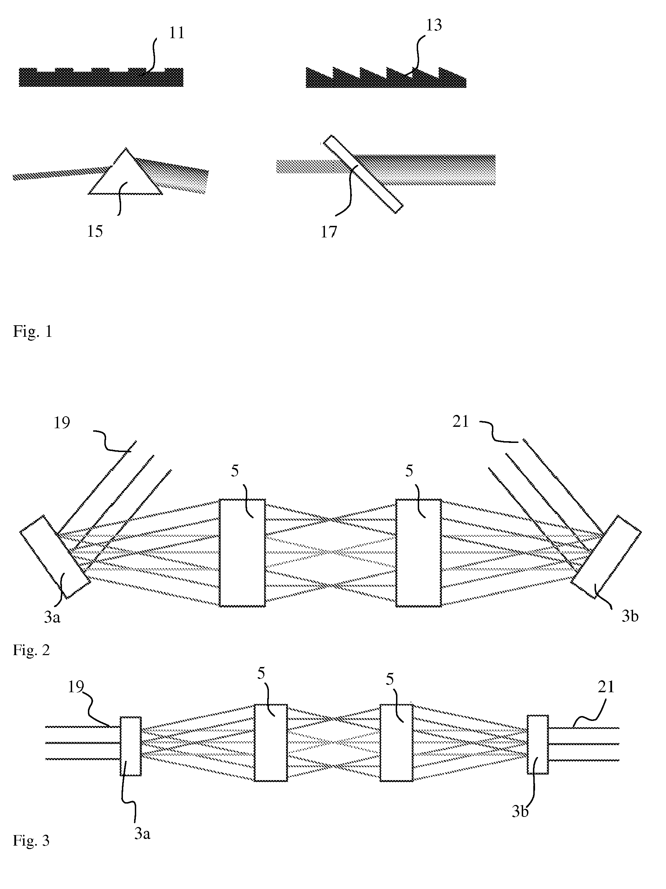

Eine Kernkomponente des erfindungsgemäßen Aufbaus sind spektralauffächernde 3a und spektralsammelnde 3b Komponenten. Beispiele dieser Kernkomponente sind gemäß dem Stand der Technik (Fig. 1):
11 THz-Beugungsgitter (in Transmission oder Reflektion betrieben)
13 THz-Beugungsgitter mit Blaze-Technik (in Transmission oder Reflektion betrieben)
15 THz-Prisma
17 THz-Wellenleiter

In 11 und 13 wird die Frequenzabhängigkeit der Beugung einer elektromagnetischen Welle genutzt um die spektrale Auffächerung zu erreichen. Beugungsgitter mit Blaze-Technik 13 weisen ein Sägezahnprofil auf, welches eine Verschiebung der spekularen Reflektion bewirkt. Bei THz-Prismen 15 verwendet man Materialien, die einen frequenzabhängigen Brechungsindex besitzen. Somit werden die unterschiedlichen Frequenzkomponenten im Prisma in unterschiedliche Richtungen gebrochen. Eine ebenfalls nutzbare Möglichkeit um eine spektrale Auffächerung oder spektrale Sammlung zu erreichen, ist die Verwendung eines THz-Wellenleiters 17. Der Wellenleiter bietet für unterschiedliche Frequenzen unterschiedliche Ausbreitungsgeschwindigkeiten, so dass analog zum Prisma eine Auffächerung der Frequenzkomponenten erreicht werden kann. Eine Kombination dieser Ausführungsbeispiele in einer Vorrichtung ist möglich. Weiterhin können spektralsammelnde und spektralauffächernde Komponenten in einer Vorrichtung gleich oder unterschiedlich aufgebaut sein.

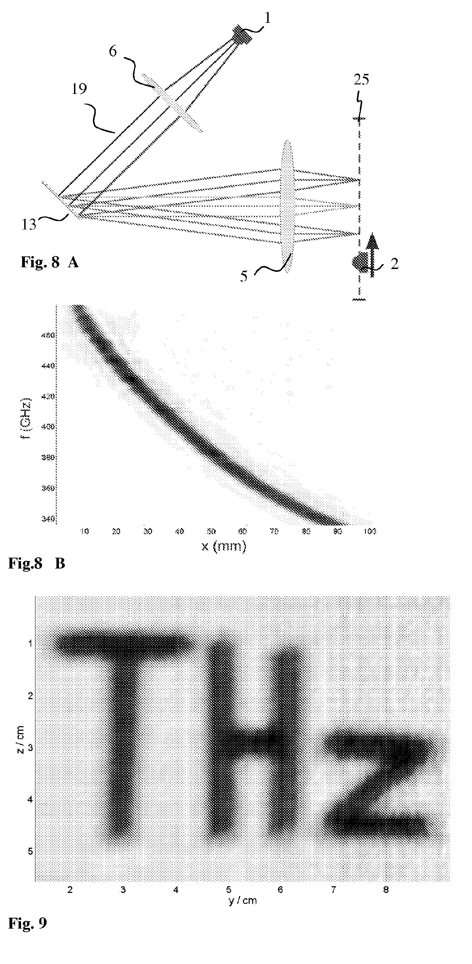

THz-Emitter 1 und THz-Detektor 2 bestehen aus zwei getrennten Bauteilen, alternativ bestehen sie aus einem einzigen Bauteil, einem sogenannten Transceiver. Es gibt verschiedene Möglichkeiten der Bilddatenauswertung. Jeder detektierte Frequenzpunkt entspricht einem Ortspunkt. Im Falle des gepulsten Systems wird auf die Zeitbereichsdaten eine Spektraltransformation angewandt (bevorzugt eine FFT / Fast Fourier Transformation) um die Daten im Frequenzraum darzustellen. Optional wird eine frequenzabhängige Normalisierung der Daten vorgenommen um System- oder Probenbedingte, frequenzabhängige Verzerrungen zu kompensieren. Der in Fig. 8B dargestellte, nichtlineare Zusammenhang zwischen Frequenz und Ortsinformation wird genutzt um den Frequenzraum in einen äquivalenten Ortsraum umzurechnen. Das Bild wird dann Linienweise zusammengesetzt und die jeweilige empfangene Signalstärke oder Phaseninformation in einem Falschfarbenbild dargestellt.

Die Erfindung beinhaltet ein Verfahren zur Messung von Bildern mit THz-Strahlung mit der beschriebenen Vorrichtung dadurch gekennzeichnet, dass die Frequenz- in eine Ortsinformation überführt wird. Unter Verwendung eines gepulsten THz-Systems wird auf diese Weise eine Bildlinie gleichzeitig gemessen und bei einem cw-System wird auf diese Weise eine Bildlinie ohne mechanische Verschiebung durch Durchstimmen der Emitterfrequenz gemessen.

Das Verfahren weist beispielsweise folgende Schritte auf:
- Die THz-Strahlung wird von einem THz-Emitter 1 erzeugt.
- Die THz-Strahlung wird durch eine spektralauffächernde Komponente 3a entsprechend der enthaltenen Frequenzen aufgefächert.
- Die aufgefächerte THz-Strahlung wird durch ein abbildendes System 5 auf einer Fokuslinie 25 fokussiert.
- Die aufgefächerte THz-Strahlung wird an einer Probe reflektiert und / oder durch diese transmittiert.
- Die von einer Fokuslinie 25 der Probe reflektierte und / oder transmittierte aufgefächerte THz-Strahlung wird durch ein abbildendes System 5 auf eine spektralsammelnde Komponente 3b geführt.
- Die aufgefächerte Strahlung wird durch eine spektralsammelnde Komponente 3b zusammengeführt.
- Die THz-Strahlung wird von mindestens einem THz-Detektor 2 gemessen.
- Das Messergebnis wird in die entsprechende Bildlinie umgerechnet.

Das Verfahren wird alternativ auch nur auf der Emitterseite verwendet mit den folgenden Schritten:
i) Die THz-Strahlung wird durch eine spektralauffächernde Komponente 3a entsprechend der enthaltenen Frequenzen aufgefächert.
ii) Die aufgefächerte THz-Strahlung wird durch ein abbildendes System 5 auf einer Fokuslinie 25 fokussiert.

Alternativ wird das Verfahren nur auf der Detektorseite verwendet mit den folgenden Schritten:
iii) Die von einer Fokuslinie 25 der Probe reflektierte und / oder transmittierte aufgefächerte THz-Strahlung wird durch ein abbildendes System 5 auf eine spektralsammelnde Komponente 3b geführt.
iv) Die aufgefächerte Strahlung wird durch eine spektralsammelnde Komponente 3b zusammengeführt.

Weiterhin werden durch Aufteilung der Strahlung mehrere Linien, auch in verschiedenen Ebenen, gleichzeitig gemessen.

### Ausführungsbeispiele

Fig. 2: In einem ersten Ausführungsbeispiel besteht die Vorrichtung aus einem Transmissionsaufbau bei dem die einfallende THz-Strahlung 19 durch die mindestens eine spektralauffächernde Komponente 3a aufgefächert wird und durch das abbildende System 5 auf einer Fokuslinie 25 fokussiert wird. Wobei diese Fokuslinie 25 im Probenbereich liegt und die THz-Strahlung die Probe durchdringt. Es folgt ein weiteres abbildendes System 5 und eine spektralsammelnde Komponente 3b. In dieser Anordnung werden in Reflektion betriebene spektralauffächernde 3a und spektralsammelnde 3b Komponenten verwendet.
Fig. 3: In einem zweiten Ausführungsbeispiel besteht die Vorrichtung aus einem Transmissionsaufbau bei dem die THz-Strahlung ebenfalls die Probe durchdringt und in Transmission betriebene spektralauffächernde 3a und spektralsammelnde 3b Komponenten verwendet werden. Dargestellt ist die einfallende THz-Strahlung 19, die Anordnung der mindestens einen spektralaufweitenden Komponente 3a, zwei der abbildenden Systeme 5, die mindestens eine spektralsammelnde Komponente 3b, sowie die ausfallende THz-Strahlung 21.

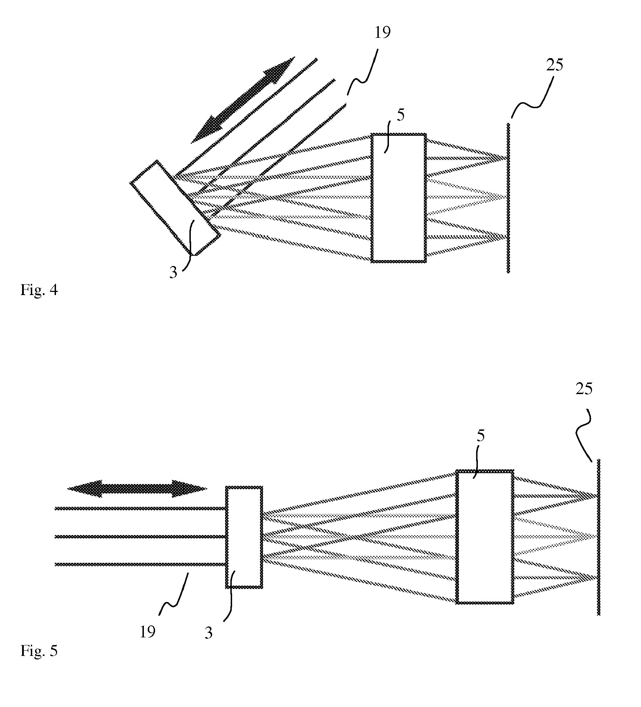

Fig. 4: In einem dritten Ausführungsbeispiel besteht die Vorrichtung aus einem Reflektionsaufbau mit in Reflektion betriebener Komponente 3, die eine spektralauffächernde 3a und spektralsammelnde 3b Funktion hat. Dargestellt sind auch ein abbildendes System 5 und die Fokuslinie 25.
Fig. 5: In einem vierten Ausführungsbeispiel besteht die Vorrichtung aus einem Reflektionsaufbau mit in Transmission betriebener Komponente 3, die eine spektralauffächernde 3a und spektralsammelnde 3b Funktion hat. Dargestellt sind auch ein abbildendes System 5 und die Fokuslinie 25.

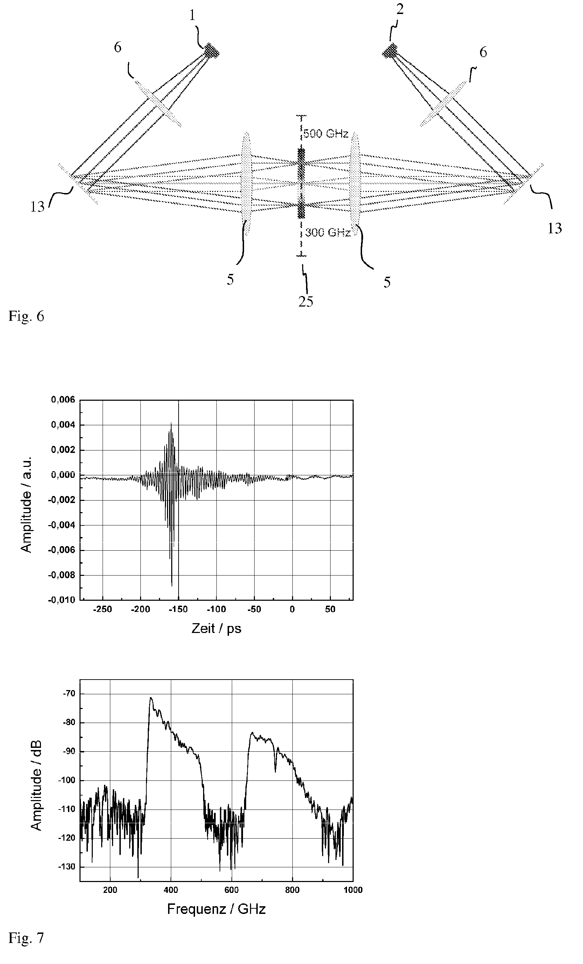

Fig. 6: In einem fünften Ausführungsbeispiel wird eine Vorrichtung betrachtet, in dem als spektralauffächernde und spektralsammelnde Komponente in Reflexion betriebene Beugungsgitter mit Blaze-Technik 13 und als abbildendes System 5 ein f-⊝-Linsensystem bestehend aus High-Density-Polyethylen THz-Linsen verwendet wird. Die Vorrichtung wird in Transmission nach der Prinzipskizze in Fig. 6 aufgebaut. Die hier verwendeten Beugungsgitter 13 verhalten sich spektralauffächernd bzw. spektralsammelnd. Durch das verwendete Linsensystem 5 werden die THz-Frequenzen beispielhaft von 300 GHz bis 500 GHz auf einer Fokuslinie 25 orthogonal zur Propagationsrichtung fokussiert. Erfindungsgemäss liegt die THz-Frequenz in einem Bereich von unter 30 GHz und bis über 100 THz. Das verwendete Beugungsgitter 13 reflektiert die THz-Strahlung abhängig von der Frequenz in verschiedene Richtungen. Die aufgefächerte THz-Strahlung wird mit Hilfe des abbildenden Systems 5 auf einer Fokuslinie 25 fokussiert. Nach der Fokuslinie 25 divergiert die Strahlung wieder und wird durch das reziprok aufgebaute System mittels eines abbildenden Systems 5 und einer spektralsammelnden Komponente, hier eines Beugungsgitters in Blaze-Technik 13, auf einen THz-Detektor 2 geführt. Durch diesen Aufbau erreicht man eine Transformation von einer beliebigen Frequenz auf einen Ort der Fokuslinie 25. Damit ist eine ortsaufgelöste Messung einer ganzen Linie im Rahmen der Messdauer eines einzigen THz-Pulses möglich.

Betrachtet man eine Messung ohne Probe in dem System nach Fig. 6, so kommt man zu dem in Fig. 7 dargestellten Messergebnis. Zwei Frequenzbänder hoher Signalstärke sind erkennbar, die der 1. und 2. Beugungsordnung des verwendeten THz-Beugungsgitters mit Blaze-Technik 13 entsprechen.

Die vorliegende Erfindung überführt die Frequenz- in eine Ortsinformation. Dieser Zusammenhang ist in Fig. 8 gezeigt. Der THz-Detektor 2 wird, wie in Fig. 8A dargestellt, entlang einer Fokuslinie 25 verfahren. Dabei werden die in Fig. 8B gezeigten Messdaten aufgenommen. Es ist deutlich zu erkennen, dass in Abhängigkeit der Position des THz-Detektors 2 auf der Fokuslinie verschiedene Frequenzanteile enthalten sind, so dass eine Umrechnung von Frequenz- in Ortsinformation möglich ist. In diesem Ausführungsbeispiel (Fig. 8A) wird die spektralauffächernde Komponente 3a, hier einem Beugungsgitter in Blaze-Technik 13, und das zugehörige Verfahren nur auf der Emitterseite verwendet, wobei die Emitterseite den Bereich des Strahlenverlaufes und alle Komponenten beinhaltet die zwischen Probe bzw. der Fokuslinie 25 und bis einschließlich des THz-Emitters 1 angeordnet sind.

In Fig. 9 wird ein THz-Bild gezeigt, das in einer erfindungsgemäßen Vorrichtung, wie im Ausführungsbeispiel gemäß Fig. 6 gezeigt, vermessen wurde. Dabei handelt es sich um die aus Aluminiumfolie bestehenden Buchstaben "THz" die auf ein Blatt Papier geklebt sind. Die Probe wurde durch einen linearen Vorschub durch die Fokuslinie verfahren und linienweise ausgewertet.

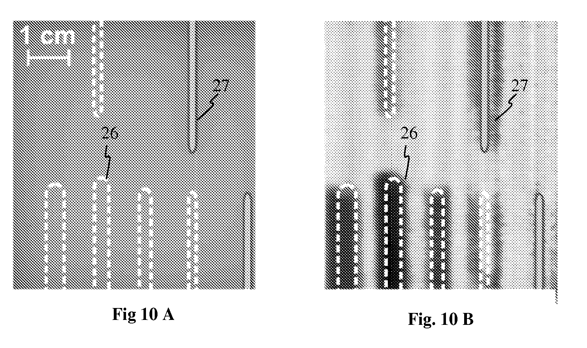

In Fig. 10B ist ein THz-Bild gezeigt, das in einer erfindungsgemäßen Vorrichtung vermessen wurde und die Struktur einer Kunststoffprobe zeigt. In 10A ist eine Fotographie der Kunststoffprobe gezeigt in dem die in der Probe vorhandenen Bohrungen 26 und Metalldrähte 27 gekennzeichnet sind.

In einem weiteren Ausführungsbeispiel (nicht dargestellt) wird die spektralsammelnde Komponente und das zugehörige Verfahren nur auf der Detektorseite verwendet, wobei die Detektorseite den Bereich des Strahlenverlaufes und alle Komponenten beinhaltet die zwischen Probe bzw. Fokuslinie 25 und bis einschließlich des THz-Detektors 2 angeordnet sind.

In einem weiteren Ausführungsbeispiel (nicht dargestellt) folgt die spektralauffächernde Komponente direkt nach dem THz-Emitter 1, d.h. der Strahlengang geht direkt vom THz-Emitter 1 auf die spektralauffächernde Komponente 3a.

In einem weiteren Ausführungsbeispiel (nicht dargestellt) folgt der THz-Detektor 2 direkt auf die spektralauffächernde Komponente 3a.

In einem weiteren Ausführungsbeispiel (nicht dargestellt) besteht die spektralauffächernde Komponente 3a aus einem THz-Wellenleiter 17 und die Strahlung wird direkt auf die Fokuslinie 25 in der Probe fokussiert.

In einem weiteren Ausführungsbeispiel (nicht dargestellt) wird die von der Probe reflektierte und / oder transmittierte Strahlung direkt von einem THz-Wellenleiter 17, der als spektralsammelnde Komponente 3b wirkt, auf einen THz-Detektor 2 geführt. In einem weiteren Ausführungsbeispiel (nicht dargestellt) wird die von der Probe reflektierte und / oder transmittierte Strahlung direkt von einem THz-Wellenleiter 17, der als spektralsammelnde Komponente 3b wirkt, und einem folgenden abbildendenden Systems 6 auf einen THz-Detektor 2 geführt.

### Bezugszeichenliste

- 1: mindestens ein THz Emitter
- 2: mindestens ein THz Detektor
- 3: Komponente mit spektralauffächernder 3a und / oder spektralsammelnder 3b Funktion
- 5: mindestens ein abbildendes System
- 6: ein zweites abbildendes System

- 11: Beugungsgitter
- 13: Beugungsgitter mit Blaze-Technik
- 15: Prisma
- 17: Wellenleiter
- 19: vom THz Emitter 1 erzeugte einfallende THz-Strahlung
- 21: ausfallende THz-Strahlung zum THz Detektor 2
- 23: Linsensystem
- 25: Fokuslinie
- 26: Bohrungen
- 27: Metalldrähte

Fig. 1: Ausführungsbeispiele der spektral aufweitenden Komponente
Fig. 2: Transmissionsaufbau mit reflektierenden spektral aufweitenden Komponenten
Fig. 3: Transmissionsaufbau mit transmittierender spektral aufweitenden Komponenten
Fig. 4: Reflektionsaufbau mit transmittierende spektral aufweitenden Komponenten
Fig. 5: Reflektionsaufbau mit reflektierender spektral aufweitenden Komponenten
Fig. 6: Ausführungsbeispiel: Prinzipskizze
Fig. 7: Messergebnis bei Messung ohne Probe
Fig. 8: Messaufbau und Messdaten: Aufnahme entlang einer Bildlinie
Fig. 9: Erfindungsgemäß erfasstes THz-Bild
Fig. 10: Weiteres erfindungsgemäß erfasstes THz-Bild einer Probe

## Patentansprüche

1. Eine Vorrichtung geeignet zur Durchführung von bildgebenden THz-Messungen bestehend aus mindestens einem THz-Emitter (1) und mindestens einem THz-Detektor (2) und **dadurch gekennzeichnet, dass** diese zusätzlich mindestens eine spektralauffächernde und / oder eine spektralsammelnde Komponente (3) aufweist.

2. Eine Vorrichtung nach Anspruch 1 **dadurch gekennzeichnet dass** die mindestens eine spektralauffächernde und / oder spektralsammelnde Komponente (3), oder die mindestens eine spektralauffächernde und / oder spektralsammelnde Komponente (3) in Verbindung mit mindestens einem abbildenden System (5) steht, so dass sie eine Frequenzinformation in eine Ortsinformation umwandelt.

3. Eine Vorrichtung nach einem der Ansprüche 1 bis 2, **dadurch gekennzeichnet, dass** die mindestens eine spektralauffächernde und / oder spektralsammelnde Komponente (3) oder die mindestens eine spektralauffächernde Komponente (3) in Verbindung mit mindestens einem abbildenden System (5) so angeordnet sind, dass eine räumliche Auffächerung des THz-Strahles in einer Raumrichtung außer der Propagationsrichtung liegt.

4. Eine Vorrichtung nach einem der Ansprüche 1 bis 3, **dadurch gekennzeichnet dass** mindestens eine spektralauffächernde Komponente (3a) auf der Emitterseite und / oder mindestens eine spektralsammelnde Komponente (3b) auf der Detektorseite vorgesehen ist.

5. Eine Vorrichtung nach einem der Ansprüche 1 bis 4, **dadurch gekennzeichnet dass** durch die mindestens eine spektralauffächernde Komponente (3a) oder die mindestens eine spektralauffächernde Komponente (3a) in Verbindung mit dem mindestens einen abbildenden System (5), eine räumliche Auffächerung des THz-Strahles orthogonal zur THz-Propagationsrichtung erzeugt wird.

6. Eine Vorrichtung nach einem der Ansprüche 1 bis 5, **dadurch gekennzeichnet dass** mindestens ein abbildendes System (5), aus einer Kombination von Linsen und / oder Spiegeln und / oder diffraktiver Optik ausgeführt ist, so dass die aufgefächerte THz-Strahlung auf einer Fokuslinie (25) fokussiert wird, zwischen der Probe und der spektralfächernden und / oder spektralsammelnden Komponente (3) angeordnet ist und / oder ein zweites abbildendes System (6) zwischen dem Emitter (1) und der spektralauffächernden Komponente (3a) und / oder zwischen dem Detektor (2) und der spektralsammelnden Komponente (3b) angeordnet ist.

7. Eine Vorrichtung nach einem der Ansprüche 1 bis 6, **dadurch gekennzeichnet dass** eine spektralauffächernde und / oder spektralsammelnde Komponente (3) als THz-Prisma (15), als THz-Wellenleiter (17), als THz-Beugungsgitter (11) und / oder als THz-Beugungsgitter mit Blaze-Technik (13) oder als Kombination der genannten Elemente ausgeführt ist.

8. Eine Vorrichtung nach einem der Ansprüche 1 bis 7, **dadurch gekennzeichnet dass** der THz-Emitter (1) ein gepulstes THz-System ist oder ein cw-System (Dauerstrich- / continuous wave System) ist.

9. Eine Vorrichtung nach einem der Ansprüche 1 bis 8, **dadurch gekennzeichnet dass** die THz-Strahlung eine Probe durchdringt (Transmissionsaufbau) und / oder an der Probe reflektiert wird (Reflektionsaufbau).

10. Eine Vorrichtung nach einem der Ansprüche 1 bis 9, **dadurch gekennzeichnet dass** die spektralauffächernde und / oder die spektralsammelnde Komponente (3) in Reflektion und / oder in Transmission betrieben wird.

11. Eine Vorrichtung nach einem der Ansprüche 1 bis 10, **dadurch gekennzeichnet dass** ein Strahlteiler so angeordnet ist, dass dieser die THz-Strahlung an mindestens einer Stelle auf dem Strahlengang zwischen THz-Emitter (1) und Probe aufteilt zur gleichzeitigen Messung mehrerer Bildlinien und / oder mehrerer Proben.

12. Eine Vorrichtung nach einem der Ansprüche 1 bis 11, **dadurch gekennzeichnet, dass** THz-Emitter (1) und THz-Detektor (2) als ein Bauteil oder mehrere Bauteile ausgelegt sind und / oder ein abbildendes System (5) oder mehrere abbildende Systeme (5) als erstes und zweites abbildendes System (6) ausgelegt ist / sind und / oder eine oder mehrere Komponenten als spektralauffächernde und als spektralsammelnde Komponente (3) ausgelegt sind.

13. Ein Verfahren zur Durchführung von bildgebenden THz-Messungen mit einer Vorrichtung gemäß einem der Ansprüche 1 bis 12, **dadurch gekennzeichnet dass** die Frequenz- in eine Ortsinformation überführt wird, aufweisend folgende Schritte:
i) Die THz-Strahlung wird durch eine spektralauffächernde Komponente (3a) entsprechend der enthaltenen Frequenzen aufgefächert.
ii) Die aufgefächerte THz-Strahlung wird durch ein abbildendes System (5) auf einer Fokuslinie 25 fokussiert.

14. Ein Verfahren zur Durchführung von bildgebenden THz-Messungen mit einer Vorrichtung gemäß einem der Ansprüche 1 bis 12, **dadurch gekennzeichnet dass** die Frequenz- in eine Ortsinformation überführt wird, aufweisend folgende Schritte:
iii) Die von einer Linie der Probe reflektierte und / oder transmittierte aufgefächerte THz-Strahlung wird durch ein abbildendes System (5) auf eine spektralsammelnde Komponente (3b) geführt.
iv) Die aufgefächerte Strahlung wird durch eine spektralsammelnde Komponente (3b) zusammengeführt.

15. Ein Verfahren zur Durchführung von bildgebenden THz-Messungen nach einem der Ansprüche 1 bis 14, **dadurch gekennzeichnet dass** Vor Schritt i) Schritt a) erfolgt:
a) Die THz-Strahlung wird von einem THz-Emitter (1) erzeugt.
Nach Schritt ii) und vor Schritt iii) Schritt b) erfolgt:
b) Die aufgefächerte THz-Strahlung wird an einer Probe reflektiert und / oder durch diese transmittiert.
Nach Schritt iv) die Schritte c) und d) erfolgen:
c) Die THz-Strahlung wird von mindestens einem THz-Detektor (2) gemessen.
d) Das Messergebnis wird in die entsprechende Bildlinie umgerechnet.
